# EUROPEAN PATENT APPLICATION

(11) **EP 2 886 920 A1**
(43) Date of publication of application: **24.06.2015**
(21) Application number: 14194824.0
(22) Date of filing: 25.11.2014
(51) Int. Cl.: F16K 37/00

(54) **Visual indicator for a safety shut off valve**

(30) Priority: 16.12.2013 US 201314107842
(71) Applicant: Honeywell International Inc., Morristown, NJ 07962-2245 (US)
(72) Inventor: Filkovski, Gregory T., Morristown, NJ New Jersey 07962-2245 (US); Young, Gregory, Morristown, NJ New Jersey 07962-2245 (US); Kucera, David, Morristown, NJ New Jersey 07962-2245 (US)
(74) Representative: Houghton, Mark Phillip

(57) **Abstract**

A valve assembly (61) may have a visual valve position indication mechanism (67) that is non-invasive relative to the body of the valve containing the fluid whose flow is controlled by the valve assembly. Valve position indication may be displayed with a lighted arrangement (64). The proof of closure sensor (62) may provide position information to the indication mechanism to display it.

## Description

This application is a continuation in part of U.S. Patent Application No. 13/326.366, filed December 15, 2011, and entitled "Gas Valve with Electronic Proof of Closure System". U.S. Patent Application Serial No. 13/326,366, filed December 15, 2011, is hereby incorporated by reference.

### Background

The present disclosure pertains to valves and particularly to an opening and closure of valves. More particularly, the disclosure pertains to indication of valve status.

### Summary

The disclosure reveals a valve assembly that may have a visual valve position indication mechanism that is non-invasive relative to the body of the valve containing the fluid whose flow is controlled by the valve assembly. A position indication may be displayed with a light arrangement. The position indication mechanism may provide the position indication to a proof of closure module.

### Brief Description of the Drawing

Figure 1 is a diagram of a safety shut-off valve having a non-invasive valve position sensor that outputs to a controller;
Figure 2 is a diagram of a cutaway view of a valve mechanism;
Figure 3 is a diagram of a valve mechanism having a sensing arrangement for determining a position of a valve sealing member relative to a seat that may incorporate optical components;
Figure 4 is a diagram of an example of a valve mechanism showing a sealing element lifted from a seat along with a position change of a transducer element relative to a sensor;
Figure 5 is a diagram of a valve mechanism with a ferrous core attached to an end of a valve stem for detection by a linear variable differential transformer sensor for indicating a position of the valve sealing member;
Figure 6 is a diagram of a valve mechanism having a spring situated between valve sealing member and a portion of valve body structure that may exert strain, tension or pressure between valve sealing member and an inside surface of a valve body structure with one or more strain gauges placed on the portion of body structure to detect a position of the valve sealing member; and
Figures 7-13 are diagrams revealing various kinds of visual indicators for showing valve position.

### Description

The present system and approach may incorporate one or more processors, computers, controllers, user interfaces, wireless and/or wire connections, and/or the like, in an implementation described and/or shown herein.

This description may provide one or more illustrative and specific examples or ways of implementing the present system and approach. There may be numerous other examples or ways of implementing the system and approach.

Safety shut off valves may need a visual indication to provide valve position. Some technologies may utilize direct contact or possibly indirect contact (through another member) of the valve shaft to prove position. The visual indication provided may not necessarily require contact of the valve shaft, directly or indirectly. Through an electromagnetic sensor (LVDT, Hall effect sensor, magneto-resistive sensor, and so on), light detection, or other sensors, a position of the valve may be determined through the use of electronics. The position indication may be transferred into lights or a series of lights that represent a valve position. By providing a gap between valve shaft and position indication, the valve stem does not necessarily have to break through a pressurized cavity of the wetted parts and be subject to contact with a fluid, therefore, providing a safer design. The visual indication may be a series of lights showing an open, closed and/or mid-stroke position of the valve.

In addition, the valve position indication may also serve as a warning or an alarm locally on the valve. The advantage of using light (e.g., generated by LED's) over traditional mechanical indicators may include better visibility from larger distances under varying ambient light conditions.

Some legal codes may require a visual indication on safety shut-off valves used in combustion applications. This may be done by use of a window and an indicator obtaining a position off the valve stem either directly or indirectly. The present approach may utilize an electromagnetic position sensor (e.g., LVDT), with an electronic package connected to a series of lights situated 360 degrees around the stem, that can sense valve position without a direct tie to the valve stem but through a gap. By utilizing a gap, the pressurized portion of the valve does not necessarily require a dynamic seal to show position, but the position may be monitored through changes in a magnetic field of the LVDT due to changes in valve stem position. The electronics may then transmit a signal from the sensor to a series of lights to show an open, closed or a mid-stroke valve position locally at the valve.

By using multiple LEDs or a display, a valve's real time position between open and closed states may be indicated. The end user may see how much the valve is open or closed according to the series of lights. The series of lights may be LED's assembled on a PCB and mounted on the valve body. Multiple LED's may be needed to indicate just open and closed positions. Per some safety standards, a dark or unlighted LED may not be used to indicate valve position, such as "closed".

Valve position may also be indicated on a display by wordings such as "OPEN", "CLOSED", "X% OPEN", and so forth. Another approach may encode valve positions into colors of light.

The valve electronics may have a communication interface which can be connected to a remote display by various media. The remote display may indicate valve position. The lights may also provide a local indication of valve health, diagnostics and/or local preventative maintenance alarms.

Use of a sensor and electronics to indicate valve position may be enabled by providing a continuous voltage supply to the valve electronics. The continuous supply is not necessarily capable of opening a valve, thus preserving the fundamental safety concept of a dual safety shut-off valve.

Failure of a voltage supply may render a lit position indicator inactive (dark) which will not necessarily be mistaken for indicating, e.g., a closed valve, as any position will virtually always be shown by a lit position indicator. Moreover, with a failed voltage supply, the electronics may be inactive and fail to provide drive-enabling signals to the one or more valves when a burner control energizes valve outputs, therefore resulting in the valves staying closed or closing upon power failure, and resulting in further safety because of the position indicator having a power feature in that the indicator provides no information about the valve position when not powered.

Fuel safety shutoff valves for commercial/industrial combustion applications may often be required by safety agency standards and/or local safety ordnances to incorporate a valve proof of closure switch into the pre-ignition interlock safety architecture. The function of the switch may be to complete a circuit when the valve is in the closed position. If the switch is not closed when it should be, the burner control may lockout the system and sound an alarm, or instead of a lockout, the burner control may just not start a new burner cycle; thus, the proof of closure switch can be a redundant safety mechanism for gas valves. It appears to be a common industry practice to utilize an electromechanical type switch (i.e., a micro-switch) acted on by a valve stem (or an alternate component coupled to the valve stem) to fulfill proof of a closure switch requirement.

There may be two options for placing the proof of closure (POC) switch in the architecture, both of which may have inherent problems. A proof of closure switch may be placed inside the gas carrying portion of a valve. This may create an issue of having line voltage in the fuel, which can result in having to obtain an explosion proof rating for the device from the appropriate government agencies. Also, with this layout, wires should be routed into the gas carrying portion of the valve and be sealed off thus creating another potential issue. A proof of closure switch may also be placed outside the gas carrying portion of the valve, to eliminate a line voltage in the fuel; however, now the valve stem must travel outside the gas stream to actuate the switch. This approach may create a need for a dynamic seal (i.e., a rolling o-ring) which can limit the potential service life of product, reduce the overall design reliability, create manufacturing and quality issues in a factory environment, and so on.

The most common solution implemented between these two options appears to be the latter (i.e., placing the switch outside the gas stream). The latter solution may give an added benefit of being able to couple a mechanical visual indicator to a valve stem and make it visible to field service installers and technicians. The purpose of the indicator may be to give visual feedback on which valve or valves are currently open or closed. The indicator may also be a requirement by certain government safety agencies.

A design issue to overcome may be how to keep all moving valve parts fully enclosed in the gas stream (i.e., no dynamic seals in the device) while keeping all electrical parts isolated from the gas stream (i.e., explosion proof rating not required).

The issue may be resolved by using modem electronic components and techniques. A "hall effect" or equivalent sensor may be placed outside the gas stream, in a location proximate to a portion of the valve stem. A magnet or equivalent transducer may be coupled to the valve stem at a location in the gas stream proximate to the sensor.

When the valve is closed, the sensor may detect that the magnet is correctly located (i.e., closure has been proven). The sensor may provide a signal to a control board to close a relay that completes a circuit running to the burner control. If a valve were to be stuck in the open position, the sensor might not detect the magnet, and the relay may stay open and the burner control would not open the safety shutoff valve or valves. For double block valves (i.e., valves that have two safety shutoff valves: V1 and V2 in one valve body), a single relay may be used to interrupt the signal to the burner control provided that the relay does not close unless both valve sensors show closure.

In this approach, a visual position indicator or indicators may be implemented electronically using the above noted control board. The board may be used to power LED's visible outside the valve's electronics compartment cover to indicate which valve or valves are open or closed.

The present approach may differ from other electromechanical proof of closure switches in that the approach solves an issue of keeping electric components out of the gas stream, while at the same time the approach does not require a dynamic seal on the valve stem.

The present approach should not necessarily be considered limited to using a "Hall effect" sensor and magnet. A configuration where there is a transducer coupled to the valve stem inside the gas stream and transmitting a signal to a sensor located outside the gas stream may meet the needs of the present approach. The "Hall effect" sensor may be just one version of the present approach. Other sensors that may be used here incorporate, but not necessarily be limited to, a strain gauge, LVDT (linear variable differential transformer), optical sensor, and so forth.

The present approach may incorporate a magnet (or an equivalent transducer) attached to a valve stem or to any part that moves with the valve stem, disk, and seal. A Hall effect device or an equivalent sensor may be placed in a known location relative to a magnet or an equivalent transducer, respectively.

Electronics needed to make a signal produced by the Hall effect (or an equivalent sensor) useable to the rest of the system may be connected to the sensor. The electronics may be just analog or a combination of analog and digital. An output relay (or an equivalent circuit) which is normally open, and closes when the sensor or sensors detect closure of the valve or valves, may be connected to the sensor or sensors through the electronics.

If digital electronics are used to process a sensor output, the software may include subroutines to automatically calibrate the sensor to the magnets (i.e., the valves) at a closed position. The approach may be advantageous over current systems which often require mechanical calibration.

An electronic circuit board which processes the sensor or sensors signals may also be used to power externally visible LEDs (or an equivalent) to act as a visual position indicator for the valve or valves.

The present approach may be built directly into the safety shutoff valve or valves, or may be added on as a module at the factory. The feature may be desirable to a manufacturer and to customers because different applications could require different safety standards based on country, region, municipality, appliance type, appliance firing rate, and so on. A customer may or may not need a proof of closure switch; thus, a system that may be easily removed from the core valve construction is highly desirable to industry.

A valve assembly utilizing a valve seat, disk, stem, and seal configuration may be a most common configuration for commercial/industrial combustion fuel safety shutoff valves. The present approach should not necessarily be considered limited to the particular mechanical construction described herein. Any kind of valve where a proof of closure switch is required or desirable may implement the present approach incorporating, but not necessarily limited to, gate valves (i.e., guillotine valves), diaphragm valves, ball valves, and so forth.

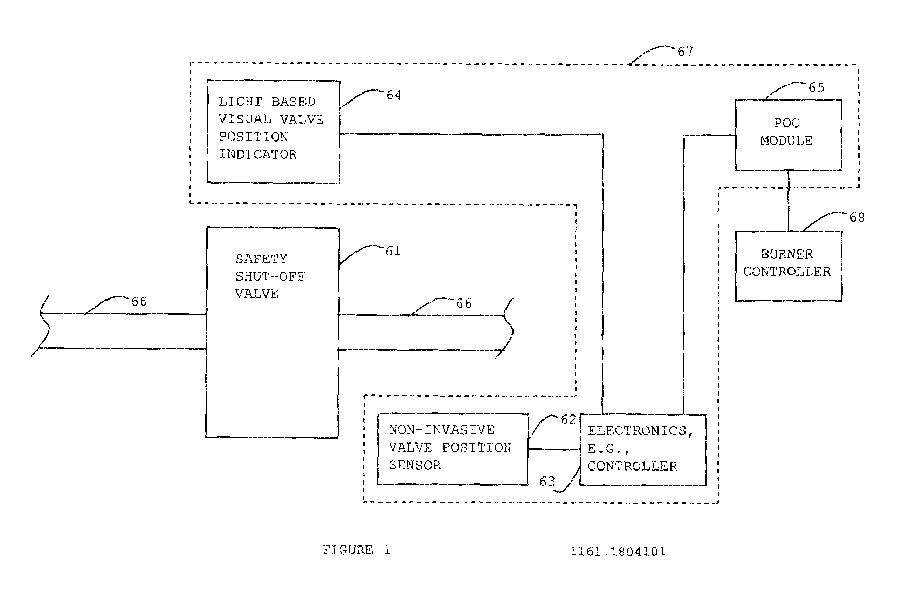

Figure 1 is a diagram of a safety shut-off valve 61 having a non-invasive valve position sensor 62. To avoid issues, such as electrical shorts, inside of the fluid conveying valve body of valve 61, or leaks from the valve body, there may necessarily be no electrical components, wires, electronics or the like within the valve body. A signal indicating position of a valve stem and thus closure, or an amount of opening in the valve for fluid flow may go to an electronics module 63, such as, e.g., a controller, a microcontroller in the valve electronics module. The signal may be converted for a signal to the light-based visual valve position indicator 64. A signal may go from electronics 63 to POC module 65 to drive a coil of a POC relay inside of module 65. As a group 67, sensor 62, electronics 63, and light-based visual valve position indicator 64 may be integrated on valve 61. Also, POC module 65 may be incorporated in group 67 as shown in Figure 1. A burner controller 68 may be external to the valve and connected to the POC relay contacts and read their status. Fluid to and from valve 61 may be conveyed by channel, line, pipe 66 or the like. Valve 61 may be particularly used in home and building HVAC systems.

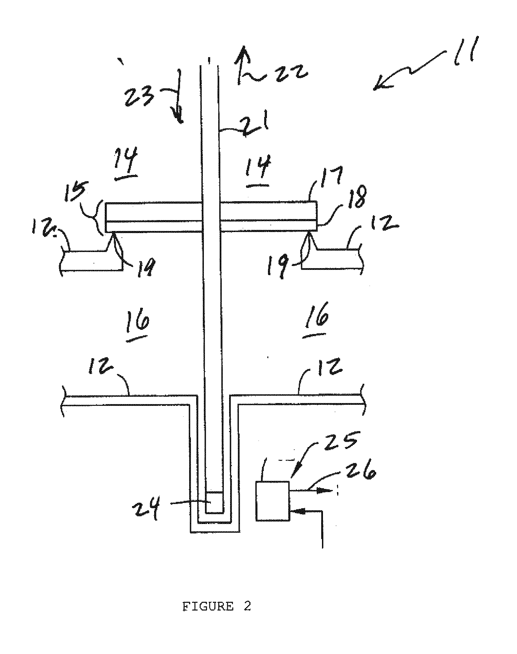

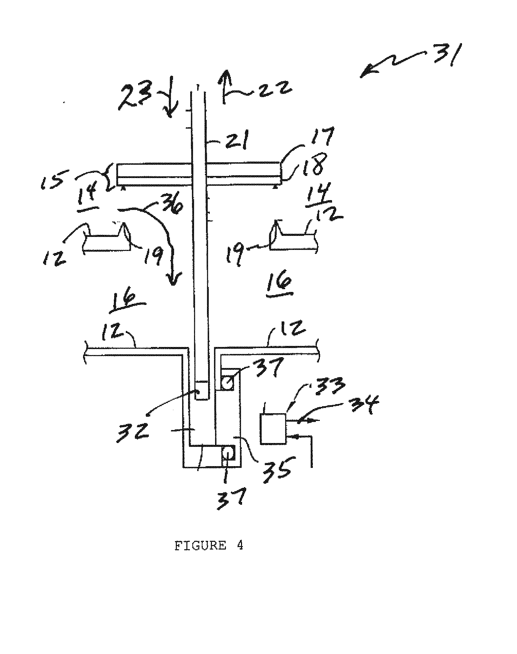

The visual indication is applicable to various kinds of valves. Examples of the valves are shown in Figures 2-5. Figure 2 is a diagram of a cutaway view of a valve mechanism 11. Structure parts 12 may incorporate walls of a valve body or cavity. Fluid may enter volume 16 from volume 14 if the valve sealing member 15 is open. The valve sealing member 15 may be constructed with a double layer with one layer being a valve disk 17 and the other layer for a valve sealing being laminated or attached in some manner onto disk 17. Sealing member 15 may instead be a one piece of appropriate material. Sealing member 15 need not necessarily be circular but could be of some other shape. If member 15 is closed, the fluid cannot necessarily flow into volume 16. If valve sealing member or disk 15 is open, then fluid may flow from volume 14 between seat 19 situated as part of structure 12 and the sealing layer 18 of valve sealing member 15 into volume 16 of the valve body structure 12. Valve sealing member 15 may be attached to a stem 21. When stem 21 moves in a direction 22, then the sealing layer 18 may move away from seat 19 so that the fluid can flow. When valve member 15 moves in a direction 23, then the sealing layer 18 may move toward seat 19 and come in contact with seat 19, so that fluid can no longer flow from volume 14 to volume 16 of the valve body. An example of fluid flow into volume 16 of the valve body is shown in a diagram of Figure 4.

A position of the sealing member 15 relative to seat 19 of the valve may be determined by a position of a sensor element 24 at an end of valve stem 21. When stem 21 moves in direction 22 or in direction 23, the up or down movement of element 24 may be detected by a field sensor or transducer 25. So field sensor or transducer 25 may send out a signal 26 that indicates the position of the sealing member 15 relative to seat 19. Signal 26 may indicate a maximum opening, a closed position, or a position between the maximum opening and the closed position. Element 24 may be a magnet for a field sensor 25 or a ferrous core when using LVDT as sensor 25. An advantage of valve mechanism 11 is being able to determine a position of the sealing member 15 without intrusion within the valve body with any conductive connection such as a wire. Position information may be converted into a visual indication as described herein.

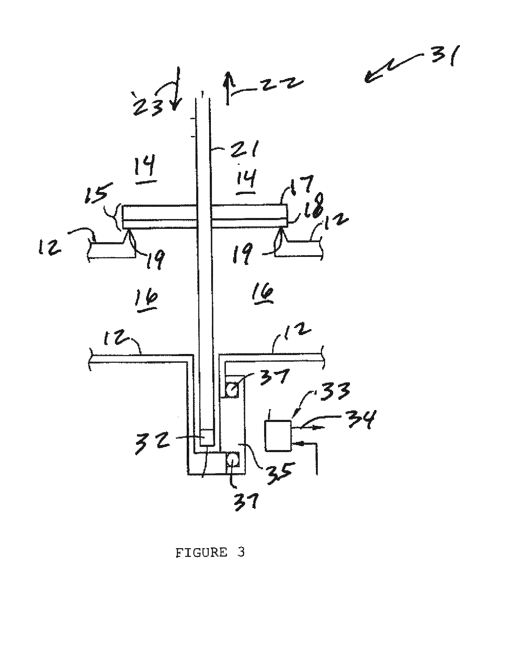

Figure 3 is a diagram that shows a valve mechanism 31 that is similar to valve mechanism 11 except that the sensing arrangement for determining a position of valve sealing member 15 relative to seat 19 may incorporate optical components. Element 32 attached to an end of valve stem 21 may be a reflector or some other visual position indicator. There may be a window 35 that is transparent. A seal 37, such as an O-ring, may be used for sealing window 35 from volume 16. Sensor 33 may project light through window 35 that is reflected by element 32 back to sensor 33. Characteristics of reflected light from element 32 may indicate a position of sealing member 15 relative to seat 19. Electronics for sensor 33 may convert the characteristics into a closed position, maximum opening and a position between the closed position and maximum opening. The position of member 15 may be provided in a signal 34 to the electronics for sensor 33. Signal 34 may be converted into a visual indication as described herein. Another arrangement may be that element 32 selectively blocks light from a light source to a light sensor depending on the step position of the valve relative to closure or opening.

Figure 4 is a diagram that shows valve mechanism 31 of the diagram in Figure 3. The diagram is an example of a valve mechanism showing sealing element 15 lifted from seat 19 along with a position change of element 32 relative to sensor 33, thereby providing an open position of valve mechanism 31. Fluid flow 36 may go from volume 14 to volume 16 or vice versa.

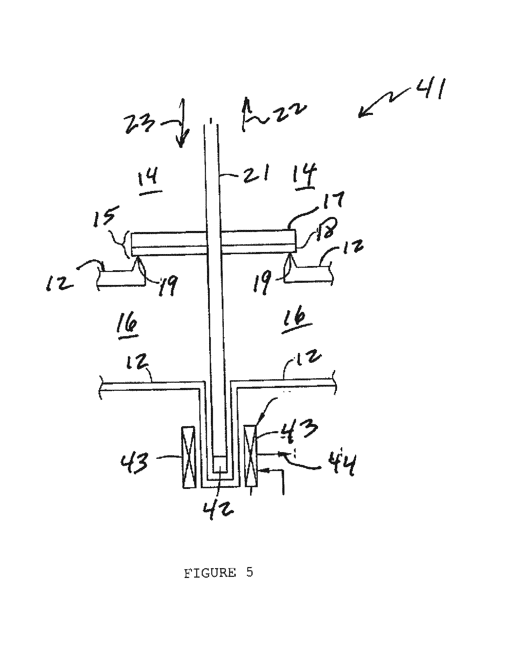

Figure 5 is a diagram of a valve mechanism 41. Stem 21 may have a sensor element 42 at its end. Sensor elements 24, 32 and 42 (Figures 2-5) may be located at various positions on stem 21 or be on another component such as valve sealing member 15 with a sensor located in an appropriate place external to the fluid portion of the valve body. Element 42 may be a ferrous core. A linear variable differential transformer (LVDT) sensor 43 may output a signal 44 indicating a position of sealing member 15 in terms of closed, maximum opening or a position between closed and maximum opening, which may be provided in terms of a visual indication.

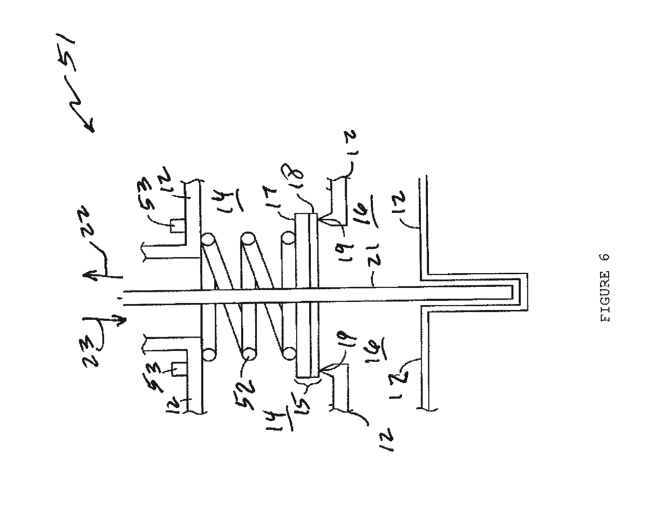

Figure 6 is a diagram of another example valve mechanism 51. A spring 52 may be situated between valve sealing member 15 and a portion of valve body structure 12. Spring 52 may exert strain, tension or pressure between valve disk 17 and an inside surface of body structure 12. One or more strain gauges 53 may be placed on a portion of body structure 12 or other place so as to measure an amount of strain, tension or pressure exerted between valve disk 17 and body structure 12. The tension exerted by spring 52 may be in either direction 22 or 23. Signals indicating an amount of strain from gauge or gauges 53 may indicate a position of valve sealing member 15 relative to seat 19. The position may be visually indicated as closed, maximum opening, or between closed and maximum opening. An amount of opening may be indicated in any kind of increment of magnitude as desired.

There may be other kinds of implementations of valves and position sensing approaches without entering into valve mechanism volumes for fluid. Various approaches for visual indication of valve status may be implemented, particularly for a safety shut-off valve and proof of closure mechanism.

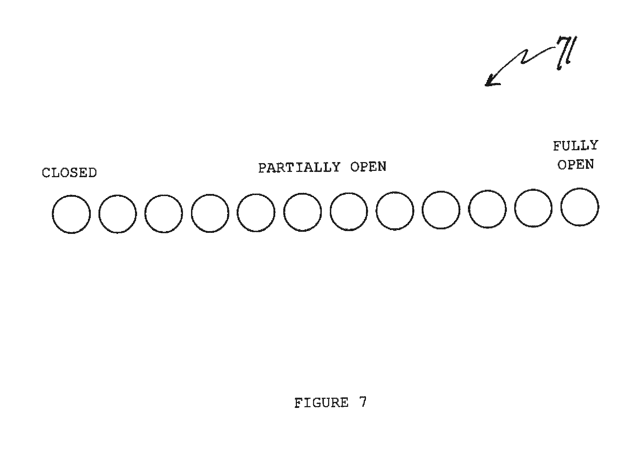

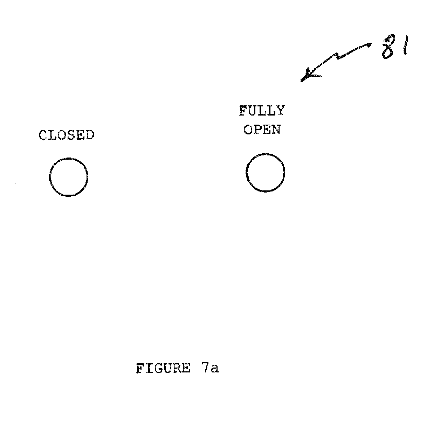

Figures 7-13 reveal various kinds of visual indicators of valve position. Figure 7 is a diagram that reveals a linear arrangement 71 of lights for closure, fully open and a position between closure and fully open. It may often be the case where only two lights are implemented--one for "closed" and one for "fully open" as shown with an arrangement 81 in Figure 7a. Instead of text, a representative pictogram may be next to each light to indicate a meaning of the light. The lights may be LED's or other light emanating devices.

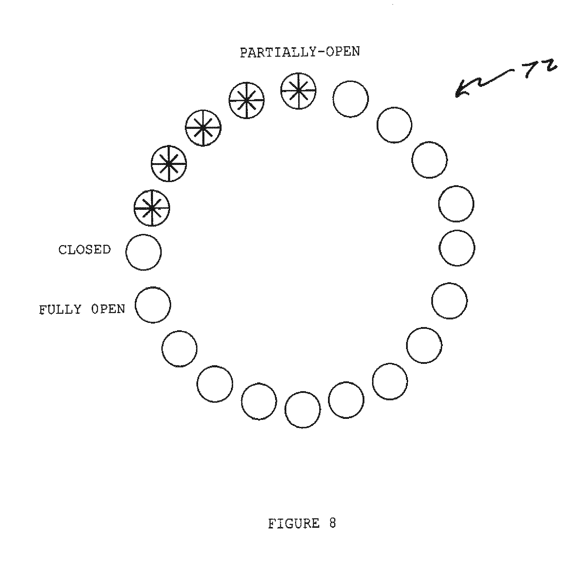

In Figure 8, a circle of a series of lights 72 may indicate closure to a full or maximum opening of a valve. These lights may be situated on or at the valve. One or more lights may indicate a closed valve. One or more lights may indicate a fully open valve. A position between closure and fully open may be indicated by one or more lights somewhere between the lights indicating closure and fully open. The lights may be LED's, small fluorescent or incandescent bulbs, and so on.

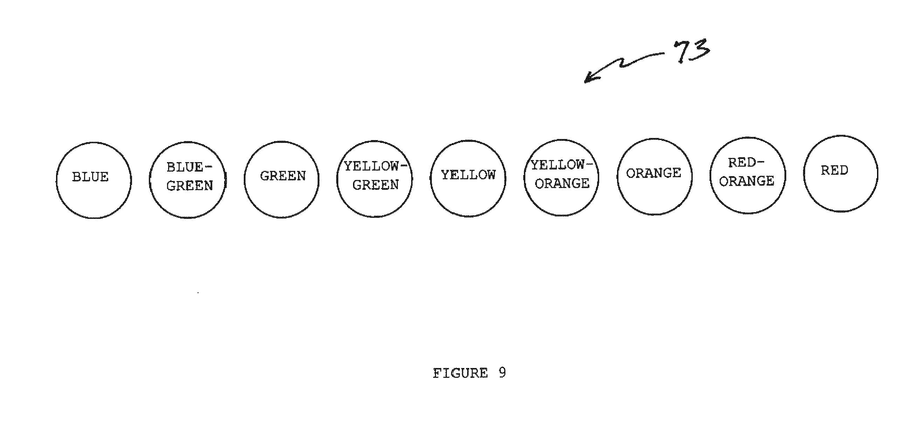

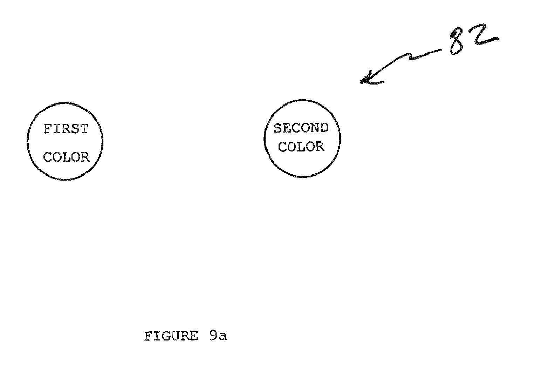

Figure 9 reveals a group of lights 73 of different colors which may indicate closure with one color, fully open with another color, and a position between closure and fully open with other colors. The colors may be arranged in a linear circular or other shape, chromatically, or otherwise. For instance, blue may represent closure and red may represent fully open. The lights may add up when turned on in a series or they may be turned on individually for different valve positions. A series of lights, having different colors arranged linearly or in a shape, such as a circle or triangle, may be used for indicating valve position. Figure 9a is a diagram of a two color (i.e., first and second colors) arrangement 82 for indicating fully open and closed positions of a valve.

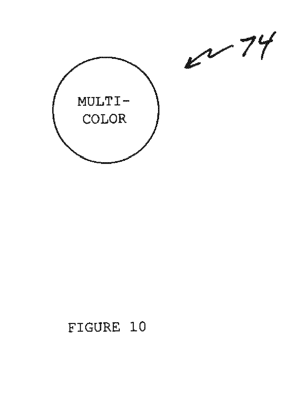

Figure 10 is a diagram where the position indication may be one light or an appearance of one light 74 that emits different colors for different positions of the valve.

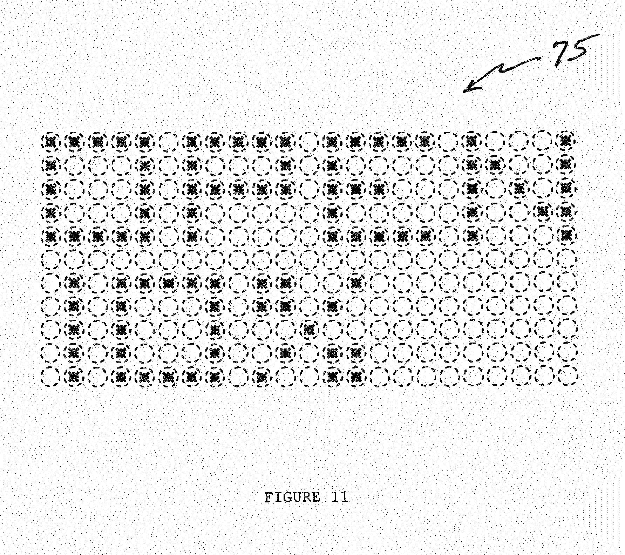

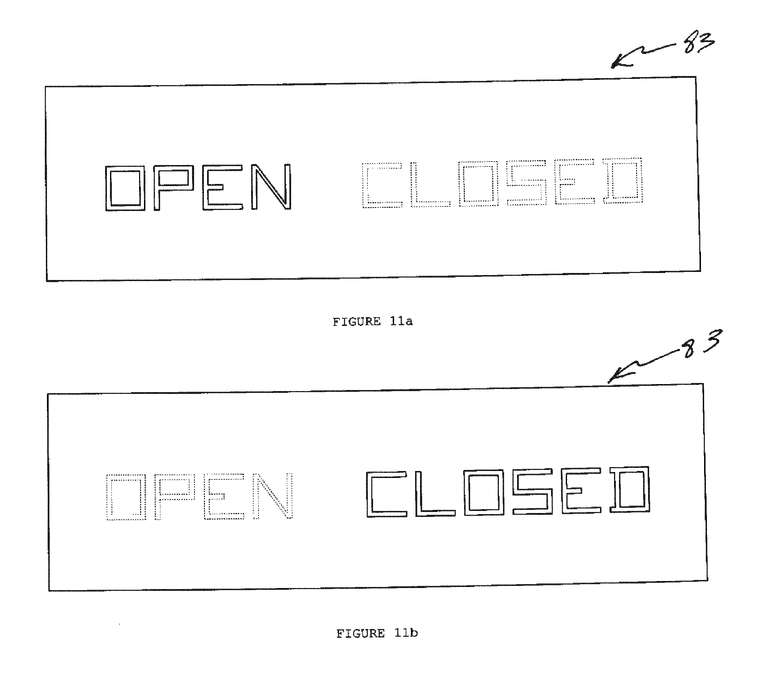

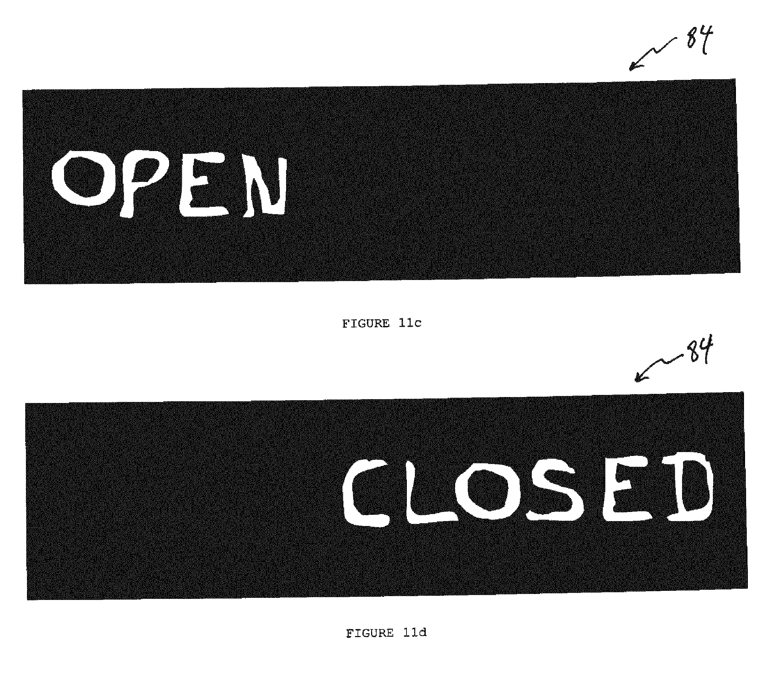

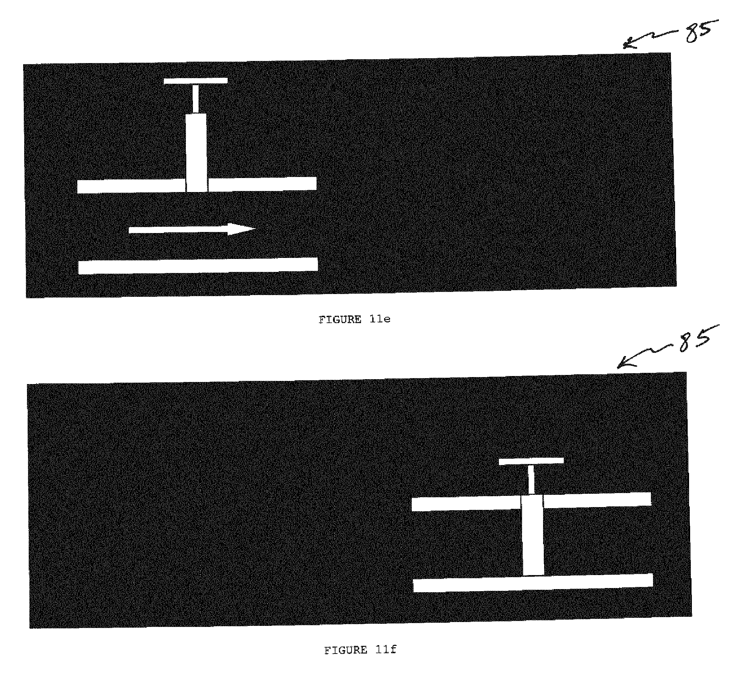

Figure 11 is a diagram of a matrix of lights 75 showing an illustrative example of an indication about a valve status. The lights may be turned on singularly or in groups to represent a position of the valve setting, or a closed or fully open position. The lights may instead turn on in a fashion to spell out the words or abbreviations of words or a graphical pictogram to respectively indicate closure, fully open and, if desired, a position between closure and fully open.

Figures 11a and 11b are diagrams 83 of a light-colored non-transparent material (such as an overlay sticker) with the words "OPEN" and "CLOSED" made of transparent or translucent material, and with two backlights (e.g., LED's), one behind "OPEN" and one behind "CLOSED". Figures 11c and 11d are diagrams 84 of a dark-colored non-transparent material with the words of transparent or translucent material like the diagrams 83 of Figures 11a and 11b. Figure 11e and 11f are diagrams 85 like diagrams 84 except, instead of words, diagrams 85 may have pictograms made of the transparent or translucent material to indicate a valve status or other relevant information.

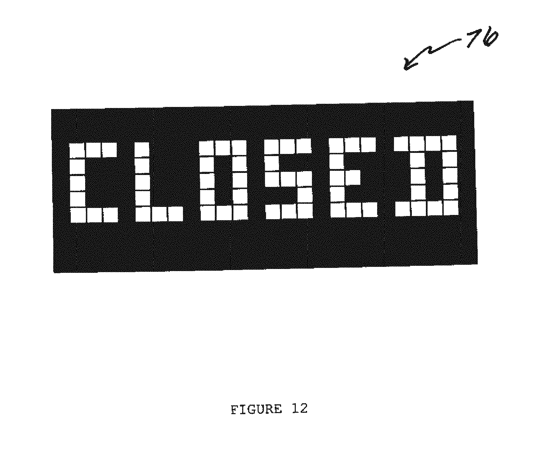

Figure 12 is a diagram of a segment display 76 to represent various valve positions in terms of words or pictograms.

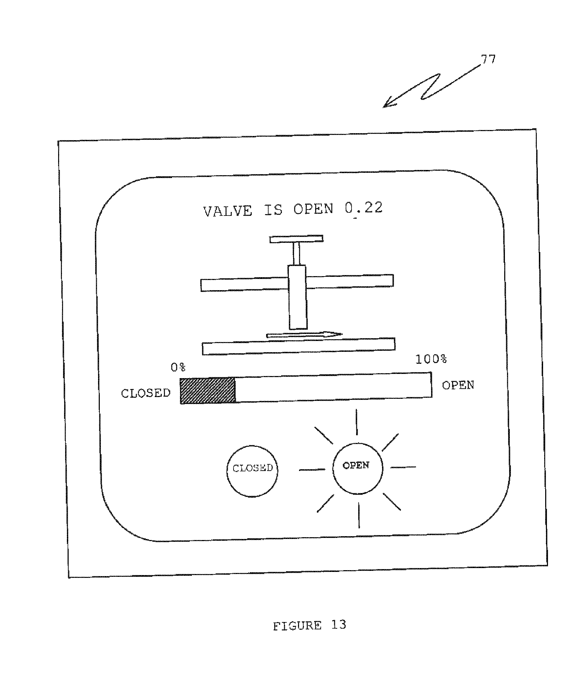

Figure 13 is a diagram of a display 77, like that of a television or computer, to indicate various valve positions, and/or other information about the valve or fluid and its flow through the valve when occurring. Display 77 may present text, pictograms, and/or illustrations indicating valve status and/or other relevant information. One or more of the indications in display 77 may be utilized for providing valve information.

To recap, an indication apparatus for a valve assembly may incorporate a sensor at a valve assembly for determining a position of components of the valve assembly relative to each other that permit or restrict flow of a fluid through the valve assembly, and an indicator connected to the sensor.

The sensor may detect the position of the components relative to each other external to the portion of the valve assembly for containing the fluid. An output of electrical signals from the position sensor may indicate the position of the components relative to each other. The electrical signals may have one or more characteristics that indicate that a fluid virtually cannot flow through the valve assembly, the fluid can flow at a maximum rate through the valve assembly, or the fluid can flow through the valve assembly at less than the maximum rate. The electrical signals may go from the sensor to an indicator. The indicator may provide a conversion of the electrical signals according to the one or more characteristics of the electrical signals into visual signals that reveal that a fluid virtually cannot flow through the valve assembly, the fluid can flow at a maximum rate through the valve assembly, or the fluid can flow through the valve assembly at a portion of the maximum rate.

The indicator may incorporate an electronic interface connected to the sensor, and a visual mechanism connected to the electronic interface.

The visual mechanism may show alphanumeric symbols which state that the valve assembly is closed, open or partially open.

The visual mechanism may incorporate one or more lights. The one or more lights may indicate that the valve assembly is closed. The one or more lights may indicate that the valve assembly is open. The one or more lights may indicate that the valve assembly is partially open.

The one or more lights that indicate the valve assembly is partially open may also indicate an amount that the valve assembly is open in terms of a portion having a range from greater than zero to less than one. Zero may represent closed. One may indicate open.

The visual mechanism may be located proximate to the valve.

If the visual mechanism is inoperative because of insufficient electrical power, then a fluid virtually cannot flow through the valve assembly.

The components of the valve assembly may incorporate a shaft, a disk attached to the shaft, and a seat on a perimeter of an opening for a flow of a fluid. The shaft and the disk may be moveable relative to the seat. A distance of the disk from the seat may be an amount of opening for the flow of a fluid through the valve assembly. The distance may range from virtually zero to a maximum distance that the disk can be from the seat. The sensor may detect the distance of the disk from the seat.

The sensor may be selected from a group consisting of a linear variable differential transformer (LVDT), a Hall effect device, a magneto-resistive sensor, a strain gauge subassembly, and an optical detector subassembly.

An approach for attaining a visual indication of a status of a valve assembly may incorporate engaging an electrical actuator to move a linkage connected to a valve part inside of a valve assembly configured to control fluid through an internal portion of the valve assembly, sensing a position of the valve part with a detector situated outside of the internal portion of the valve assembly, converting the position of the valve part into a status of the valve assembly, and converting the status of the valve assembly into a visual indication of the status of the valve assembly.

The status of the valve assembly may incorporate virtually no flow, maximum flow or a fraction of maximum flow for a fluid through the internal portion of the valve assembly. If power is unavailable to the electrical actuator, then the status of the valve assembly may become or have virtually no flow.

If the visual indication of the status of the valve assembly is inoperative due to a lack of power, then the status of the valve assembly may become or have virtually no flow.

There may be a visual indication of the status of the valve assembly as virtually no flow.

The visual indication of the status of the valve assembly may be provided by one or more lights. The lights may be situated proximate to the valve assembly. The lights may be lit in a fashion to indicate the status of the valve assembly that comprises virtually no flow, maximum flow, or a portion of maximum flow for a fluid through the internal portion of the valve assembly.

A portion of maximum flow for a fluid through the internal portion of the valve assembly may be indicated in increments that range from virtually no flow to maximum flow for a fluid through the internal portion of the valve assembly.

An indication system for a valve may incorporate a valve body having an inlet and an outlet and having a fluid path between the inlet and the outlet, a valve situated in the fluid path between the inlet and the outlet, a valve actuator, secured relative to the valve body for selectively moving the valve relative to an axis, between a closed position, which closes the fluid path between the inlet port and the outlet port, and an open position, which opens the fluid path between the inlet port and outlet port, a sensor fluidly isolated from the fluid path of the valve body, and radially or axially spaced from the axis, where the sensor detects axial distance between a stem of the valve and the sensor to determine whether the valve is in a closed position, a maximum open position, or a position between the closed position and the maximum open position, an electronics module connected to the valve actuator, and a visual indicator connected to the sensor, where the visual indicator provides an illuminated indication of whether the valve is in a closed position, a maximum open position, or a position between the closed position and the maximum open position.

The system may further incorporate an electronic controller connected to the valve actuator, the sensor and the visual indicator. If electrical power fails at the electronic controller, then the valve may automatically proceed to a closed position.

The illuminated indication of the visual indicator may incorporate a plurality of lights. A first pattern having one or more lights of the plurality of lights may indicate the closed position. A second pattern having one or more lights of the plurality of lights may indicate an open position. A third pattern having one or more lights of the plurality of lights may indicate an amount of opening between the closed position and a maximum open position.

If there is an absence of electrical power to the visual indicator, then the valve may be closed.

The visual indicator may provide information about the valve according to a color emanated by the visual indicator. A first color may indicate a closed valve. A second color may indicate an open valve.

A third color and/or additional colors may indicate an amount of opening between the closed valve and a fully open valve. A fourth color and/or additional colors may indicate valve health, diagnostics, and/or preventive maintenance alarms.

In the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

## Claims

1. An indication apparatus for a valve assembly, comprising:
a sensor at a valve assembly for determining a position of components of the valve assembly relative to each other that permit or restrict flow of a fluid through the valve assembly; and
an indicator connected to the sensor; and
wherein:
the sensor detects the position of the components relative to each other external to the portion of the valve assembly for containing the fluid;
an output of electrical signals from the position sensor indicates the position of the components relative to each other;
the electrical signals have one or more characteristics that indicate that a fluid virtually cannot flow through the valve assembly, the fluid can flow at a maximum rate through the valve assembly, or the fluid can flow through the valve assembly at less than the maximum rate;
the electrical signals go from the sensor to an indicator; and
the indicator provides a conversion of the electrical signals according to the one or more characteristics of the electrical signals into visual signals that reveal that a fluid virtually cannot flow through the valve assembly, the fluid can flow at a maximum rate through the valve assembly, or the fluid can flow through the valve assembly at a portion of the maximum rate.

2. The apparatus of claim 1, wherein the indicator comprises:
an electronic interface connected to the sensor; and
a visual mechanism connected to the electronic interface.

3. The apparatus of claim 2, wherein the visual mechanism shows alphanumeric symbols which state that the valve assembly is closed, open or partially open.

4. The apparatus of claim 2, wherein:
the visual mechanism comprises one or more lights;
one or more lights indicate that the valve assembly is closed; and
one or more lights indicate that the value assembly is open.

5. The apparatus of claim 4, wherein one or more lights indicate that the value assembly is partially open.

6. The apparatus of claim 4, wherein:
that the one or more lights that indicate the valve assembly is partially open also indicate an amount that the valve assembly is open in terms of a portion having a range from greater than zero to less than one;
zero represents closed; and
one indicates open.

7. The apparatus of claim 6, wherein the visual mechanism is located proximate to the valve.

8. The apparatus of claim 2, wherein if the visual mechanism is inoperative because of insufficient electrical power, then a fluid virtually cannot flow through the valve assembly.

9. The apparatus of claim 1, wherein:
the components of the valve assembly comprise a shaft, a disk attached to the shaft, and a seat on a perimeter of an opening for a flow of a fluid;
the shaft and the disk are moveable relative to the seat;
a distance of the disk from the seat is an amount of opening for the flow of a fluid through the valve assembly;
the distance ranges from virtually zero to a maximum distance that the disk can be from the seat; and
the sensor detects the distance of the disk from the seat.

10. The apparatus of claim 9, wherein the sensor is selected from a group consisting of a linear variable differential transformer (LVDT), a Hall effect device, a magneto-resistive sensor, a strain gauge subassembly, and an optical detector subassembly.

11. A method for attaining a visual indication of a status of a valve assembly, comprising:
engaging an electrical actuator to move a linkage connected to a valve part inside of a valve assembly configured to control fluid through an internal portion of the valve assembly;
sensing a position of the valve part with a detector situated outside of the internal portion of the valve assembly;
converting the position of the valve part into a status of the valve assembly; and
converting the status of the valve assembly into a visual indication of the status of the valve assembly; and
wherein:
the status of the valve assembly comprises virtually no flow, maximum flow or a fraction of maximum flow for a fluid through the internal portion of the valve assembly; and
if power is unavailable to the electrical actuator then the status of the valve assembly becomes or comprises virtually no flow.

12. The method of claim 11, wherein:
the visual indication of the status of the valve assembly is provided by one or more lights;
the lights are situated proximate to the valve assembly;
the lights are lit in a fashion to indicate the status of the valve assembly that comprises virtually no flow, maximum flow, or a portion of maximum flow for a fluid through the internal portion of the valve assembly; and
a portion of maximum flow for a fluid through the internal portion of the valve assembly is indicated in increments that range from virtually no flow up to maximum flow for a fluid through the internal portion of the valve assembly.

13. An indication system for a valve comprising:
a valve body having an inlet and an outlet, and having a fluid path between the inlet and the outlet;
a valve situated in the fluid path between the inlet and the outlet;
a valve actuator, secured relative to the valve body for selectively moving the valve relative to an axis, between a closed position, which closes the fluid path between the inlet port and the outlet port, and an open position, which opens the fluid path between the inlet port and outlet port;
a sensor fluidly isolated from the fluid path of the valve body, and radially or axially spaced from the axis, where the sensor detects axial distance between a stem of the valve and the sensor to determine whether the valve is in a closed position, a maximum open position, or a position between the closed position and the maximum open position;
an electronics module connected to the valve actuator; and
a visual indicator connected to the sensor, where the visual indicator provides an illuminated indication of whether the valve is in a closed position, a maximum open position, or a position between the closed position and the maximum open position.

14. The system of claim 13, further comprising:
an electronic controller connected to the valve actuator, the sensor and the visual indicator; and
wherein:
if electrical power fails at the electronic controller, then the valve automatically proceeds to a closed position; and
if there is an absence of electrical power to the visual indicator, then the valve is closed.

15. The system of claim 13, wherein:
the visual indicator provides information about the valve according to a color or pattern emanated by the visual indicator;
a first color or pattern indicates a closed valve;
a second color or pattern indicates an open valve;
a third color or pattern and/or additional colors or patterns indicate an amount of opening between the closed valve and a fully open valve; and
a fourth color or pattern and/or additional colors or patterns indicate valve health, diagnostics, and/or preventive maintenance alarms.
